Europäisches Patentamt

European Patent Office

Office européen des brevets

(19)

(11) Publication number: **0 123 405**
**A2**

# (12) EUROPEAN PATENT APPLICATION

(21) Application number: **84301759.1**

(22) Date of filing: **15.03.84**

(51) Int. Cl.³: **F 16 K 1/22**

(30) Priority: **28.03.83 GB 8308485**
**11.04.83 GB 8309781**

(43) Date of publication of application:
**31.10.84 Bulletin 84/44**

(84) Designated Contracting States:
**AT BE CH DE FR GB IT LI LU NL SE**

(71) Applicant: **R.A.J. THOMSON ENGINEERS AND**
**CONTRACTORS LIMITED**
**Church Street**
**Wetherby West Yorkshire, LS22 4LP(GB)**

(72) Inventor: **Holdsworth, Peter**
**The Beeches Shaw Lane**
**Leeds West Yorkshire, LS6 4DU(GB)**

(74) Representative: **Geldard, David Guthrie et al,**
**URQUHART-DYKES AND LORD 11th Floor, Tower House**
**Merrion Way**
**Leeds, LS2 8PB West Yorkshire(GB)**

(54) Improvements relating to flow control valves.

(57) A flow control valve comprises a valve housing (1) of generally circular cross-section. A valve member (3) lies within the housing, the valve member being in the form of a section of a right circular cylinder subtending an angle of 180° to the axis of the cylinder and lying between two planes 4 and 5 that each include and lie along an axis B-B about which the valve member is pivoted. The pivotal mounting is by diametrically opposite pivot means, one at each side of the housing. The hosing includes a dome (11) defined from a centre at the point where the pivot axis intersects the axis of the housing. Means are provided for pivoting the valve member through substantially 90° between an open position lying adjacent to the dome and in effect forming a continuation of the passageway through the valve housing and a closed position lying across the passageway to close the housing to flow of material therethrough. Part of the valve member is accommodated by the dome during such pivotal movement and means are provided for effecting sealing between the valve member and the valve housing in the closed position.

FIG.1

- 1 -

IMPROVEMENTS RELATING TO FLOW CONTROL VALVES

This invention relates to flow control valves and particularly to a valve designed to close a circular cross-section pipe to flow of fluid through the pipe.

Through flow of fluid in such a pipe is commonly controlled by a so-called butterfly valve comprising, in its simplest form, a circular disc of substantially the same diameter as the pipe lying within the pipe and pivotally mounted by a spindle extending diametrically of the pipe. The disc may pivot between a closed position wherein it lies perpendicular to the pipe axis, so preventing fluid flow, and an open position wherein it lies in a plane containing the pipe axis. In the open position flow is permitted, but in all types of butterfly valve the spindle and disc extend across the pipe in the open position, so presenting some resistance to flow and creating turbulence. Furthermore, the spindle and disc are susceptible to erosion as they lie in the flow path of the fluid passing through the pipe. Particularly if the fluid has abrasive qualities erosion can be very severe and it is not uncommon to have to replace valve units at intervals of only a few weeks. Very often such valves are used in locations where access is particularly difficult, for example in drilling rigs where the valves may be used to control the flow of liquid carrying

- 2 -                              0123405

suspended particles from the drill bit.  Replacement is
then an onerous procedure.

The object of the invention is to provide a valve
effective in opening or closing a circular cross-section
pipe to through flow, yet without the aforesaid disadvantages of the conventional butterfly valve.

According to the invention a flow control valve
comprises a valve housing having a longitudinal
passageway therethrough; first and second pivot means
located at opposite sides of the housing and defining a
pivot axis perpendicular to and intersecting the
longitudinal axis of the housing; a valve member pivoted
within the housing by said pivot means, the valve
member being in the form of a section of a right
circular cylinder, which section subtends an angle
of substantially 180° to the cylinder axis and lies
between two planes that each include, and intersect
along, the pivot axis;  and means for pivoting the valve
member from an open position wherein it forms a continuation of the passageway and its axis is substantially
coaxial with the longitudinal axis of the housing, and
a closed position lying across the passageway to close
this to flow of material therethrough; the housing
having an internal region that is of greater diameter
than the passageway in order to accommodate part of the
valve member during such movement.

It will be seen that in such a valve the valve
member is supported on two separate pivot points at
diametrically opposite parts of the housing, and an
enlarged part of the housing accommodates that part of
the valve member which projects beyond the inner
diameter of the passageway during pivotal movement of
the valve member between the open and closed positions.
In its open position, the valve member effectively
forms a continuation of the passageway.  Thus, no  part
of the valve extends across the passageway when the valve is in the open condition, and turbulence caused by the valve and exposure to wear of the valve is accordingly greatly reduced.

The valve is suitable for use in low or high pressure applications and in the closed position of the valve the convex surface of the valve member may face either towards or away from the direction of the flow. In either case the part-cylindrical formation of the valve member is helpful in resisting pressure applied in the direction of the flow.

Preferably the two planes between which the valve member is defined include between them an angle of from 60° to 120°. The preferred angle is 90°, which facilitates optimum design within the available space. Design is also facilitated if the plane that includes the axis of the valve member and the pivot axis lies at an angle of from 30° to 45° to one of the two planes between which the valve member is defined.

Conveniently said internal region of the housing is defined by the inner surface of a dome projecting from the wall of the housing, the inner surface being part-spherical and defined from a centre lying substantially at the point of intersection of the housing axis and the pivot axis. The inner surface of the dome may desirably subtend an angle of from 60° to 90° to the centre from which it is defined.

For low pressure applications the mere presence of the valve member lying across the valve housing with a reasonably close fit may be sufficient effectively to prevent fluid flow. More usually, however, the valve will include means for effecting sealing between the valve member and the valve housing when the valve member is in the closed position.

In order that the invention may be better understood particular embodiments of valves in accordance therewith will now be described in more detail by way of example only, with reference to the accompanying drawings in which:-

Figure 1 is a side view of a first embodiment of valve in the open position;

Figure 2 is an opposite side view of the valve of Figure 1 in the closed position;

Figures 3 and 4 are views similar to Figures 1 and 2 of a second embodiment of valve, with actuating mechanism omitted;

Figure 5 is a view in the direction of the arrow V in Figure 3; and

Figures 6 and 7 are views similar to Figures 1 and 2 of a third embodiment of valve, again with actuating mechanism omitted.

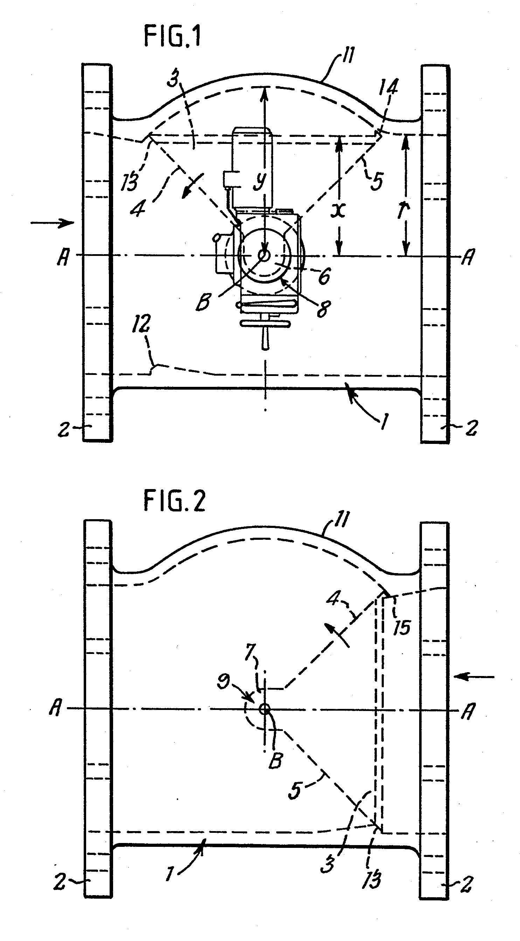

Referring to Figures 1 and 2 there is shown a flow control valve comprising a valve housing 1 in the form of a generally circular cross-section hollow pipe having end flanges 2 by way of which it may be joined to adjacent pipe work. The housing has a longitudinal passageway formed therethrough, the longitudinal axis of the housing and of the passageway being shown at A-A. A somewhat saddle-shaped valve member 3 is located within the housing 1. The valve member is in the form of a section of a right circular cylinder having an axis which, when the valve member is in the position shown in Figure 1 is coincident with the axis A-A. The section subtends an angle of 180° to the cylinder axis and has ends 4 and 5 which each lie in a plane, the two planes intersecting along a line B-B perpendicular to and intersecting the axis A-A.

Each side of the valve member terminates in an arm 6, 7 respectively by way of which the valve member is pivotally mounted on the valve housing by pivot means 8, 9 located at opposite sides of the housing and defining a pivot axis along line B-B. A rotary actuator
shown generally as 10 is mounted on the housing
adjacent to one of the pivot means.

A dome 11 extends from the valve housing in the
vicinity of the valve member, the inner surface of the
dome being part of a sphere drawn from a centre lying
at the point of intersection between the pivot axis
B-B and the longitudinal axis A-A of the valve housing.

From Figures 1 and 2 it will be seen that the
dome accommodates part of the valve member as this is
moved by the actuator between the fully open position
shown in Figure 1 and the fully closed position shown
in Figure 2. In the fully open position the valve
member effectively forms a continuation of the
passageway across the area of the dome. In the
closed position the valve member lies across the
passageway and effectively closes this to through
flow of the liquid in the direction shown by the
arrow.

If the internal bore of the housing, apart from
the dome, were of constant internal radius r then for
the desired effect to be obtained certain geometrical
relationships must be satisfied. These are that the
valve member be formed as part of a hollow cylinder
having an outer radius x that is no greater than r,
the shape of the valve member desirably being
defined by projecting onto a cylinder with outer
radius x a circle also of radius x, resulting in the
angles between the planes containing ends 4 and 5 being
90°. The spherical inner surface of the dome 6 in order
to accommodate movement of the valve member must have
a radius y of not less than $\sqrt{2}(x)$. It will be seen
that if x = r and y = $\sqrt{2}(r)$ (as shown in the
drawings) then in the closed position the valve member
would be an exact fit across the diameter of a valve
housing of constant internal radius r and would
completely seal the valve housing.

In practice it is more convenient to shape the internal surface of the valve housing to accommodate the valve member more easily both in its open and closed positions and to facilitate sealing between the valve member and the valve housing. Thus, as shown in Figures 1 and 2 the inlet to the valve housing partially tapers inwardly and partially is formed with a step 12. When the valve member is closed an edge 13 of the valve member seats on the step 12 and a shaped section 14 on the other edge of the valve member cooperates with the end of the tapered section 15. Sealing strips may be provided to complete sealing in these regions. Suitable sealing means are also provided around the pivot means where this passes through the wall of the housing.

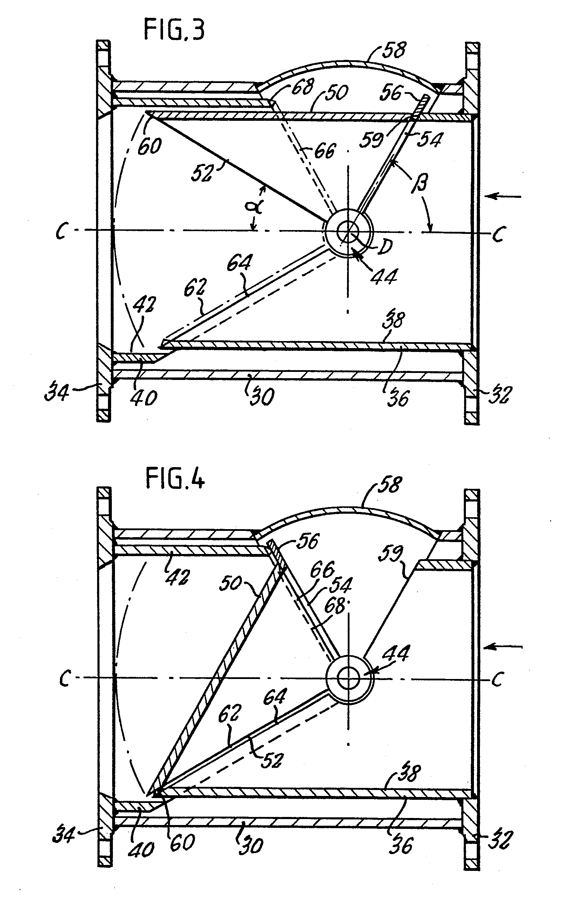

Referring now to Figures 3 to 5 this shows a shut-off valve particularly suitable for low pressure applications. The valve    comprises a valve housing in the form of a generally circular cross section hollow pipe 30 having end flanges 32, 34 by way of which it may be joined to adjacent pipe work. A first inner tubular portion 36 extends axially from the first end flange 32 and has a bore 38 forming an inlet section of a longitudinal passageway through the valve, the axis of the passageway being shown as C-C. A second inner tubular portion 40 extends axially from the second end flange 34 and has a bore 42 forming an outlet section of the longitudinal passageway. Pivot assemblies 44, 46 are provided at diametrically opposite sides of the housing and define a pivot axis D-D at right angles to, and intersecting, the longitudinal axis C-C. Each pivot assembly extends through the tubular portions 38 and 40 as appropriate and through the pipe 30 and is suitably sealed therein. The pivot assembly 44 has means 48 to which any suitable actuator may be mounted.

A valve member shown generally as 50 is carried by
the pivot assemblies for pivotal movement about
the axis D-D. The valve member is in the form of
a section of a right circular cylinder which subtends
an angle of 180° to the axis of the cylinder, that
axis being colinear with the axis C-C when the valve
is in the open position as shown in Figure 3. The
valve member lies between two planes 52 and 54 which
intersect in the region of the pivot axis. The
valve member carries a flange 56 projecting beyond the
outer surface of the valve member, the mid-plane of
the flange lying in the plane 54. The angle between
the planes 52 and 54 is 90°, the angle $\alpha$ lying between
the plane 52 and a plane including the longitudinal
axis C-C and pivot axis D-D is 30° and the angle $\beta$
between the latter plane and the plane 54 is 60°.

In the region of the valve member the pipe 30
is formed with a dome 58 having a part-spherical
inner surface defined from a centre lying at the
point of intersection of the axes C-C and D-D. The
radius of the dome is such that it will accommodate
the valve member 50 and its flange 56 during movement
from the open position shown in Figure 3 to the closed
position shown in Figure 4 and vice versa.

As will be seen from Figure 3 when the valve is
in the open position the flange 56 abuts against
an end part 59 of the tubular portion 38, that end
part subtending an angle of substantially 180° to the
longitudinal axis C-C and lying in a plane that also
makes an angle $\beta$ with the plane including the axes
C-C and D-D. In this position the valve 50 forms a
continuation of the passageway defined within the
tubular section 36 and material can flow freely
through the valve in the direction shown by the arrow.

In order to close the valve the actuator is operated to rotate the valve member through 60° from the position shown in Figure 3 to that shown in Figure 4. In this position the end face 60 of the valve member, lying in plane 52, contacts a resilient sealing member 62 secured to a sealing end 64 of the tubular member 1, which sealing end subtends an angle of substantially 180° to the axis C-C opposite to the dome 58 and which also lies in a plane making an angle $\alpha$ with the plane including axes C-C and D-D. In the closed position the flange 56 also makes contact with a sealing member 66 secured to a sealing end 68 of the tubular member 42, which sealing end subtends an angle of substantially 180° to the axis C-C and which makes an angle equal to the angle $\beta$ with the plane including the axes C-C and D-D. The two sealing engagements together with the sealing extending around the pivot assemblies prevents further flow through the valve.

In the embodiment shown, 30° and 60° have been chosen as optimum values for the angles $\alpha$ and $\beta$ respectively, with the angle between the planes 52 and 54 chosen at 90°. It will be readily appreciated, however, that the principle illustrated may be utilised with the angle between the planes 52 and 54 and the angles $\alpha$ and $\beta$ changed from the values given, the radius of the dome being also altered to accommodate the necessary movement of the valve member.

The valve shown in Figures 3 to 5 is conveniently fabricated as shown from the outer pipe and the two inner tubular members. Space left between these elements and not required for movement of the valve member may, if required, be filled with a suitable hard setting compound. In an alternative embodiment it is possible to make either or both of the inner tubular elements integral with the outer pipe by suitable machining operations. In the embodiment shown resilient sealing elements are secured to the respective faces of the stationary inner tubular members. Alternatively, those sealing elements could be carried by the appropriate faces of the valve member and flange 56, but in those locations the seals are potentially more subject to abrasive wear from materials conveyed through the valve housing.

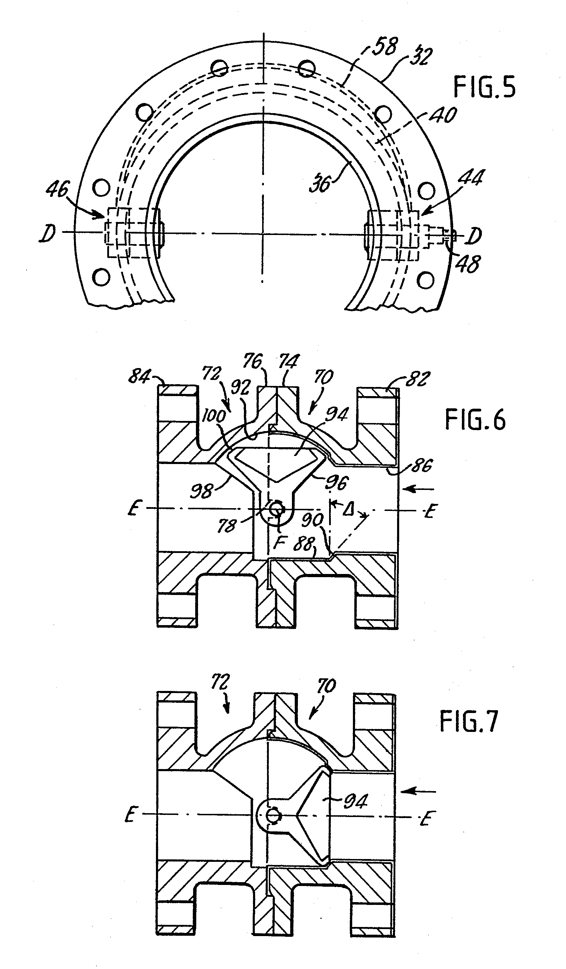

Figures 6 and 7 illustrate a further valve according to the invention, which may be cast in materials making it suitable for high pressure application. In this embodiment the valve housing is formed in two axial parts 70 and 72 joined together by bolts passed through flanges 74 and 76. The part 70 of the housing is formed with a cut-out 78 at each side of the respective part, the cut-outs being diametrically opposite and each having a lining and seal for pivot means to be mounted therein. Each axial part forming the housing has an end flange 82, 84 respectively, by way of which it may be connected to other pipework. The housing part 72 has a circular section inlet passageway 86 joined to an axially central passageway section 88 by an annular face 90 forming an acute angle $\Delta$, conveniently equal to 40°, with a plane transverse to the longitudinal axis E-E of the housing. The axially central parts of the housing section form a dome 92 having an inner surface which is hemispherical and centred on the point of intersection of the longitudinal axis E-E and the pivot axis F-F. The axial part 72 is formed on its inner surface and axially end surfaces with a lining 94 of resilient material, desirably a low-friction material with polytetrafluoroethylene being presently preferred.

Pivotally mounted within the housing is a valve member 94 in the form of a section of a right circular cylinder subtending an angle of 180° to the axis of the cylinder. The ends 96, 98 of the valve member lie in planes that each include and intersect along the the pivot axis F-F, the angle between those planes being 90°. The periphery of the main section of the valve member is machined to provide a circular face 100, which also makes an angle $\Delta$ to a plane including the axis of the cylinder from which the valve member is formed and the pivot axis.

As will be seen from the drawings, when the valve is in the open position the valve member forms an effective continuation of the inlet passageway 86 and material can flow freely through the valve. To close the valve the valve member is rotated through 90° to the position shown in Figure 7 wherein the face 100 seals again the face 90 to prevent flow through the valve. The lining 93 on the face 90 acts as a resilient seating against which the valve member will make an effective seal.

The valve shown in Figures 6 and 7 may be modified by utilising a pivot arrangement such that the last few degrees of pivot movement of the valve member into the closed position are eccentric and result in the valve member being physically moved towards and positively held against the seat formed by the face 90. This may allow the resilient lining 93 to be omitted and a metal to metal seal obtained.

Although a number of embodiments of valve have been described it will be appreciated that further modifications to the wall may be made, and that other valves may readily be designed using the principles disclosed.

CLAIMS:

1. A flow control valve comprising a valve housing having a longitudinal passageway therethrough; first and second pivot means located at opposite sides of the housing and defining a pivot axis perpendicular to and intersecting the longitudinal axis of the housing; a valve member pivoted within the housing by said pivot means, the valve member being in the form of a section of a right circular cylinder, which section subtends an angle of substantially 180° to the cylinder axis and lies between two planes that each include, and intersect along, the pivot axis; and means for pivoting the valve member from an open position wherein it forms a continuation of the passageway and its axis is substantially coaxial with the longitudinal axis of the housing, and a closed position lying across the passageway to close this to flow of material therethrough; the housing having an internal region that is of greater diameter than the passageway in order to accommodate part of the valve member during such movement.

2. A flow control valve according to claim 1 in which the two planes between which the valve member is defined include between them an angle of from 60° to 120°.

3. A flow control valve according to claim 1 in which the two planes between which the valve member is defined include between them an angle of 90°.

4. A flow control valve according to claim 3 in which the plane that includes the axis of the valve member and the pivot axis lies at an angle of from 30° to 45° to one of the two planes between which the valve member is defined.

5. A flow control valve according to any one of the preceding claims in which said internal region of the housing is defined by the inner surface of a dome projecting from the wall of the housing, the inner surface being part-spherical and defined from a centre lying substantially at the point of intersection of the housing of the housing axis and the pivot axis.

6. A flow control valve according to claim 5 in which the inner surface of the dome subtends an angle of from 60° to 90° to the centre from which it is defined.

7. A flow control valve according to any one of the preceding claims in which the internal radius of valve member is no less than the internal radius of an inlet section of the longitudinal passageway through the housing and no greater than the internal radius of an outlet section of the longitudinal passageway through the housing.

8. A flow control valve according to any one of the preceding claims and including means for effecting sealing between the valve member and the housing when the valve member is in the closed position.

9. A flow control valve according to claim 8 in which the passageway has an axially central section and an axially end section of diameter less than the central section, the two sections being joined by an annular face forming an acute angle with a plane transverse to the longitudinal axis of the housing, and the valve member has a sealing surface cooperable with said annular face to effect sealing when in the closed position.

10. A flow control valve according to claim 8 in which the valve housing comprises first and second end flanges, an outer shell of substantially right circular cylindrical form extending between the flanges, a first inner tubular portion extending axially from the first end flange and having a bore forming an inlet section of said longitudinal passageway, a second inner tubular portion extending axially from the second end flange and having a bore forming an outlet section of said longitudinal passageway, the tubular portions having sealing ends that are remote from their respective end flanges and that are shaped to cooperate with sealing parts of the valve member when in the closed position to effect sealing.

11. A flow control valve according to claim 10 in which at least one of each of the sealing ends and the associated sealing part over its respective area of cooperation is provided with resilient sealing means.

12. A flow control valve according to claim 10 or claim 11 in which at least one of the inner tubular portions is integral with the outer shell.

13. A flow control valve according to claim 10 or claim 11 in which one of said tubular portions is of greater diameter than the other and parts of the tubular portions overlap axially within the outer shell.

14. A flow control valve according to any one of claims 10 to 13 in which over a 180° angle subtended to the axis of the housing on the side thereof opposite to the greater diameter internal region of the housing sealing is effected by engagement of the end of the valve member that lies in the first plane with the sealing end of the first inner tubular portion, and over the other 180° angle subtended to the axis of the housing sealing is effected by engagement of a flange projecting beyond the outer surface of the valve member and lying substantially in the second plane with the sealing end of the second inner tubular portion.

15. A flow control valve according to any one of the preceding claims in which the valve housing comprises two axial parts separable in a plane transverse to the axis of the housing and containing the pivot axis.

FIG.1

FIG.2

0123405

1/3

0123405

## FIG.3

## FIG.4

0123405

FIG.5

FIG.6

FIG.7